# EUROPEAN PATENT SPECIFICATION

(11) **EP 0 279 120 B1**
(45) Date of publication and mention of the grant of the patent: **02.06.1993**
(21) Application number: 87310684.3
(22) Date of filing: 04.12.1987
(51) Int. Cl.: G01M 3/32

(54) **Container inspection apparatus**
Apparat zum Prüfen von Behälter
Appareil d'examen de récipient

(30) Priority: 24.12.1986 US 946411
(43) Date of publication of application: 24.08.1988
(73) Proprietor: Emhart Glass Machinery Investments Inc., Wilmington, Delaware 19801 (US)
(72) Inventor: Giometti, Stephen M., Horseheads New York 14845 (US); Shay, Timothy W., Horseheads New York 14845 (US)
(74) Representative: Wetters, Basil David Peter

(56) References cited:
- DE-U- 1 853 540
- GB-A- 2 075 202
- GB-A- 2 164 453
- US-A- 4 061 014
- US-A- 4 490 800

## Description

The invention relates generally to leak detectors for containers and deals more particularly with an apparatus for testing the sealability of the mouth of a container.

A wide variety of surface finish leak detectors were previously known such as those disclosed in U.S. Patents 3,496,761 and 4,490,800. These detectors inspect the surface of a bottle mouth as the bottle is fed by a conveyor or auger screw to an inspection site located beneath the detector. The detector of U.S. Patent No. 3,496,761 includes a test fitting which is lowered into engagement with the mouth of the bottle at the inspection site and forms an air-tight seal if the bottle mouth is properly formed - smooth, flat and generally horizontal; otherwise, a leak results. The sealability of the bottle mouth by the test fitting mimics the sealability of the bottle mouth by a cap or other type of commercial seal.

In the various leak detectors previously known, air is injected into the bottle and pressure is sensed according to a variety of schemes. For example, in U.S. Patent 3,496,761 a metered volume of air is injected into the container by a piston and cylinder assembly which forms a pump. At the conclusion of the discharge stroke of the piston and cylinder assembly, while the test fitting still closes the mouth of the container under test, the air pressure retained in the container is gauged to determine whether an excessive leakage takes place due to imperfections in the container mouth. While this system is effective in detecting flaws in the surface of a bottle mouth, it is limited in the rate at which it can inspect bottles. Also, the differences in pressure between good bottles and leakers varies with the amount of time available after the metered volume of air is injected in the bottle for the apparatus subsequently to measure the pressure in the bottle.

US 4,490,800 discloses an apparatus for testing the mouth of a glass bottle for sealing surface defects at an inspection site comprising a test fitting with an aperture passing there through, conveyor means for presenting a succession of glass bottles to the inspection site, means for moving the test fitting into engagement with the mouth of a glass bottle at the inspection site, a source of pressure regulated gas in the form of a piston and cylinder device adapted to deliver a metered volume of air, a hose for coupling the source to the aperture in the test fitting to deliver the gas to the glass bottle when the test fitting engages the glass bottle at the inspection site, and a pressure transducer connected to the hose for measuring the pressure in the glass bottle. In this apparatus, a metered volume of air is injected into the bottle, and the pressure transducer measures the peak pressure developed in the container, which will be higher for a good bottle than for one with defects. This system requires that compensation be made for wear in the piston and cylinder device injecting the metered volume of air and also for changes in atmospheric conditions, and in the apparatus of 4,490,800 this is achieved by making the standard with which the peak pressure in the bottle is compared the average of the peak pressure developed in a number (for example 8) of immediately preceding satisfactory bottles.

GB-A-2075202 discloses an apparatus for testing leaks in large metal containers, for example drums for chemicals. It comprises a test fitting with an aperture passing there through, means for moving the test fitting into engagement with a mouth of a container at an inspection site and a source of pressure regulated gas. The apparatus tests the containers in these two stages, and obtains an indication of the pressure developed in the container by measuring the thrust necessary to restrict distortion of the container. In the first stage, which is intended to detect gross defects in the container, air is discharged from a reservoir into the container and the thrust developed after a given time is compared with a standard. If this standard is achieved or exceeded, the container is supplied with further air under pressure, and on termination of the supply of air a further comparison of the thrust developed with a standard is made, and the container is passed as satisfactory if an adequate thrust is developed. The operation of the apparatus is necessarily somewhat slow - a cycle time of 6 to 7 seconds is suggested - and the apparatus is essentially concerned with the testing of flexible containers and could not be used for glass containers which are essentially rigid.

Accordingly, a general object of the present invention is to provide a detector to sense the sealability of a container mouth which detector is reliable and accurate and provides a high throughput.

A more specific object of the present invention is to provide a detector of the foregoing type which is reliable over a wide range of bottle throughputs.

Another specific object of the present invention is to provide a leak detector of the foregoing type which is reliable over a wide range of container capacities.

Another general object of the present invention is to provide a high speed detector to sense other types of leaks in containers.

The present invention provides an apparatus for testing the mouth of a glass bottle for sealing surface defects at an inspection site comprising
a test fitting with an aperture passing there through
conveyor means for presenting a succession of glass bottles to the inspection site
means for moving the test fitting into engagement with the mouth of a glass bottle at the inspection site
a source of pressure regulated gas
a hose for coupling the source to the aperture in the test fitting to deliver the gas to the glass bottle when the test fitting engages the glass bottle at the inspection site
a pressure transducer connected to the hose for measuring the pressure in the glass bottle
a restrictor between the source and the connection to the transducer for limiting the rate of flow of gas from the source into the glass bottle at the inspection site, so that the pressure within the glass bottle will increase towards a steady state pressure which would be higher for a glass bottle without defects than for a glass bottle with defects
means which samples the approximate pressure in the bottle measured by the transducer a predetermined time after the test fitting engages the glass bottle mouth and gas begins to flow into the glass bottle, such time being before a steady state pressure is established if the glass bottle is properly sealed by the test fitting, whether or not the glass bottle has defects,
means for comparing the sampled pressure with a standard
and means for rejecting the glass bottle if the sampled pressure does not agree with said standard.

The invention will now be further described with reference to the accompanying drawings, in which
Figure 1 is a plan view of a leak detector according to the present invention;
Figure 2 is a schematic block diagram of key components of the leak detector of Figure 1;
Figure 3 is a graph illustrating the pressure rise in a container having a proper sealing mouth which pressure rise is due to injection of air by the leak detector of Figure 1 into the bottle;
Figure 4 is a bar graph illustrating the performance of the leak detector of Figure 1 and that of U.S. Patent No. 3,496,761;
Figure 5 is a schematic block diagram of key components of another leak detector according to the present invention and;
Figure 6 is a flowchart of a computer program utilized in the embodiment of Figure 5.

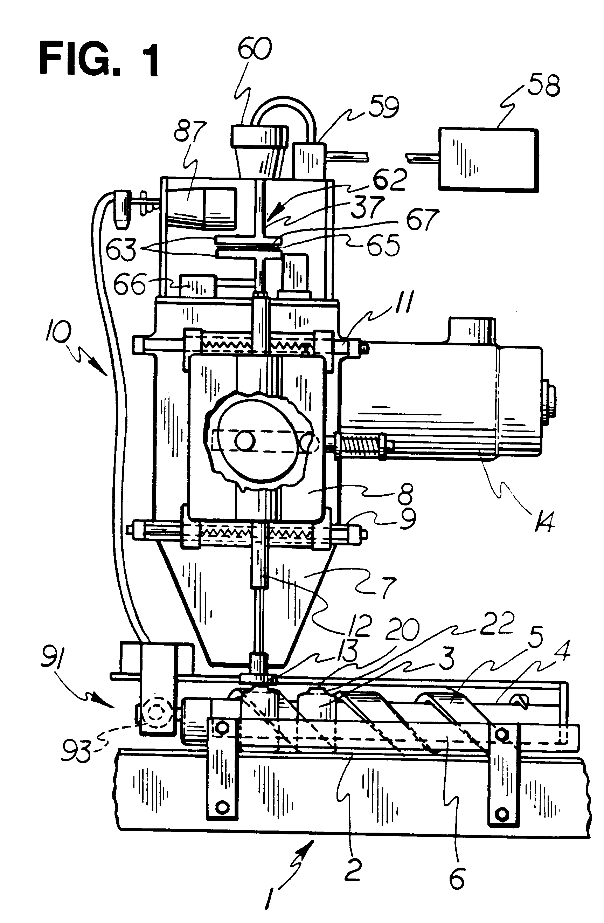

Figure 1 illustrates a finish leak detector generally designated 10 according to the invention and a frame 1 on which a link-type conveyor belt 2 is mounted for horizontal movement from right to left. A series of containers 3 to be tested, shown here in the form of glass bottles, are brought into the testing area by the conveyor 2, and are traversed through the testing area at uniform speed and in accurately spaced relation by a rotating cylinder 4 having a spiral thread 5 of appropriate pitch to receive and traverse the containers as they are held in the thread spaces by means of a spring mounted guide rail 6.

The detector 10 includes a support plate 7 fixedly mounted on the frame 1, and a carriage member 8 mounted thereon with freedom for limited horizontal sliding movement on guide bars 9 and 11. A tubular telescopic plunger 12 is mounted for vertical movement in the carriage 8, directly above the path of the containers 3, and a test fitting 13 is detachably mounted on the lower end of the plunger in position to be brought into engagement with an upper surface 20 of a mouth 22 of a container by downward movement of the plunger. The test fitting 13 has an orifice which communicates with the interior of the container 3.

Means including a motor 14 is provided for rotating the threaded cylinder 4 to traverse the container through the test area, for reciprocating the plunger 12 to move the test fitting into and out of engagement with a container as it moves through the test area, and for sliding the carriage 8 to cause the plunger and test fitting to travel in unison with the container as long as the test fitting is in engagement therewith. For more details of many parts of the detector 10, reference may be made to U.S. Patents No. 3,496,761 and No 4,490,800.

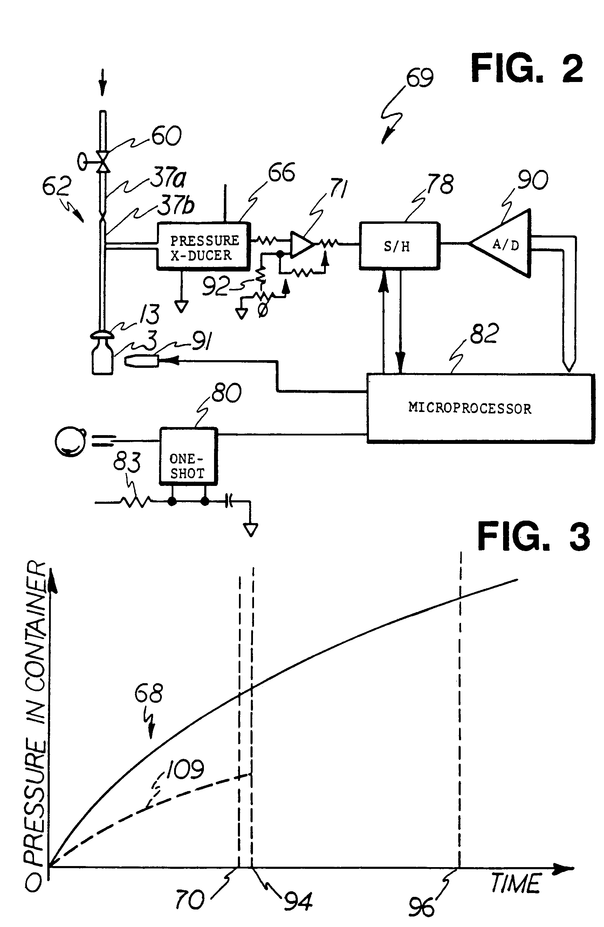

Focusing now on the present invention, the apparatus 10 also includes a pressure regulator 60 supplied by a remote compressor 58 coupled through a fitting 59, and a fluid flow restrictor 62 which controls the flow of air through a hose 37 as illustrated in Figures 1 and 2. By way of example, the regulator 60 is a Precision "Norgren" which regulates the air to 5.49 x 10⁴ Pa (8 pounds per square inch). Such is the pressure within the section 37a of the hose 37 upstream of the flow restrictor 62. The section 37b is downstream of the restrictor 62 and is connected at its other end to the test fitting 13 in communication with the orifice.

The flow restrictor 62 comprises two ferrule fittings 63,63 which receive the hose section 37a and 37b and a plate 65 supported between the two fittings. The plate has an orifice 67 which by way of example is 1.58 mm (1/16 inch) in diameter which limits the rate of air flow through the hose 37. Preferably, the orifice diameter is in the range of 3.18 to 0.79 mm (1/8 inch to 1/32 inch).

When the test fitting 13 is lowered onto the surface 20 of the bottle 3, air flows into the bottle at a gradual rate. The rate is logarithmic as illustrated by a curve 68 in Figure 3 for a properly sealed bottle. Because of the restrictor 62, the curve has a relatively long rise time compared to a fixed, sample time 70. The sample time is the time after the detector 10 begins to inject air into the bottle at which the surface leak detector measures the pressure within the bottle 3, and by way of example, the sample time equal 95 milliseconds. In keeping with the objects of the invention, the detector 10 is able to accommodate a wide range of bottle throughputs so that the sample time 70 is slightly less than the total inspection time available at the largest throughput.

The size of the orifice 67 and the characteristics of the pressure regulator 60 are chosen such that the pressure in the bottle 3 at the sample time does not reach the steady state pressure of the regulator 60 (in the aforesaid example 5.49 x 10⁴ Pa (8 psi) even if the bottle is properly sealed. The sample time is preferably also set to correspond with a bottle pressure in a properly sealed bottle which is less than two-thirds and more preferably less than or approximately half the pressure of the regulator 62 for a properly sealed bottle to optimize the sensitivity of the system. In the aforesaid example, the pressure in a properly sealed 350 ml (12 ounce) bottle will rise to approximately 2.75 x 10⁴ Pa (4 psi) at the sample time 70. The fixed sample time also ensures that the same segment of the pressure rise curve is utilized regardless of the throughput.

The flow reducing device 62 is also chosen such that an average size leak in the surface finish of the bottle causes a significant reduction in the net flow of air into the bottle and a substantial decrease in the slope of the pressurizing curve 68. Consequently, the pressure resulting in the bottle at the sample time for a leaky bottle is substantially less than that of a properly sealed bottle. Preferably, the pressure within the bottle at the sample time for a bottle having an average size leak .025 square mm (0.0039 square inches), is less than two-thirds and more ideally approximately one-half or less than the pressure resulting at the sample time within a properly sealed bottle. In the aforesaid example, the bottle 3 has an average size leak and is pressurized to 1.37 x 10⁴ Pa (2 psi) at the sample time 70 as indicated by a broken line 109 in Figure 3 illustrating the rise in pressure. The flow reducing device 62 also reduces the consumption of compressed air for economy.

Because the size of the flow reducing device 62 is selected in accordance with the size of an average leak, and the size of an average leak is approximately constant regardless of bottle capacity, neither the flow reducing device 62 nor the regulator 60 need be changed for different bottle capacities. However, if desired the orifice in the flow reducing device 62 may be increased for relatively large capacity bottles.

Turning to Figure 2, wherein certain of the above described elements of detector 10 are schematically illustrated in cooperation with electronic components 69, the bottle pressure is sensed by a pressure transducer 66 which is coupled to the hose segment 37b, and yields an electrical signal having a magnitude proportional to the pressure within the hose segment 37b, and the bottle 3. The output of the pressure transducer 66 is fed to an amplifier 71 which amplifier output is connected to a sample and hold circuit 78. The sample and hold circuit 78 is triggered by a micro-processor 82 at the sample time 70. The sample time 70 is either set by a fixed resistor 83 or manually adjustable by a potentiometer to correspond to the type of machine performing the inspection and control a pulse width produced by a one-shot 80. A cam 84 coupled to the conveyor belt transmits an enabling pulse to the one-shot 80 when the fitting 13 contacts the bottle 3. The micro-processor 82 triggers the sample and hold circuit 78 when the one-shot 80 pulse times out.

The analog voltage stored in the sample and hold circuit 78 after each sample time 70 is sensed by an analog to digital converter 90, the output of which is fed to the micro-processor 82. The micro-processor 82 compares the bottle pressure indicated by the analog to digital converter 90 to a predetermined standard and if it is less, transmits a signal to a bottle rejector 91. The bottle rejector is located slightly downstream from the inspection site and may comprise a source of pressurized air 87 and a nozzle 93 aimed across the conveyor to intercept the defective bottle.

The gain of the amplifier 71 is optionally controllable by a feedback potentiometer 92 to utilize the full range of the analog to digital converter 90. As discussed above, the pressure resulting in a good bottle at the sample time 70 is a function of the bottle capacity. The adjustment to the gain of the amplifier 71 also optionally allows the usage of a single standard within the microprocessor 82 for comparison to the actual bottle pressure as noted above.

Figure 3 also shows the rise in pressure within the bottle 3 after the sample time 70. A time 94 is the time that the test fixture 13 is lifted from the bottle mouth 4 when the bottle throughput is maximum and a time 96 is the time that the test fixture 13 is lifted from the mouth of another bottle 3 at a lower throughput. However, it is not necessary that any further samples be taken of the bottle pressure after the sample time 70 in either case.

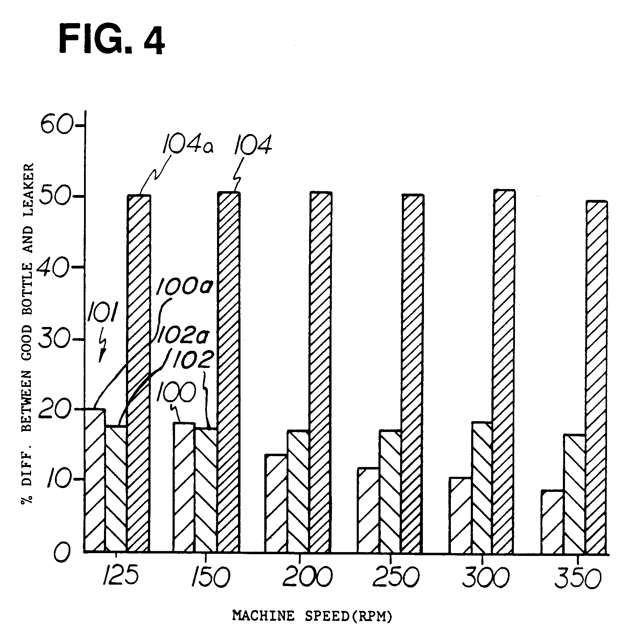

Figure 4 illustrates the performance of the finish leak detector 10 in comparison to a prior art system similar to that disclosed in the U.S. Patent 3,496,761. The test is performed on 350 ml (twelve ounce) bottles having a .025 square mm (0.0039 square inch) leak. A first bar 100a of the first triplet 101 represents the pressure differential between a good bottle and a leaky bottle at the sample time in the 3,496,761 system at a relatively low throughput, 125 bottles per minute. In the illustrated embodiment, the pressure differential of 20% is good. A second bar 102a of the aforesaid triplet illustrates the pressure differential between a good bottle and a leaky bottle when inspected by the present finish leak detector 10 without the adjustment to gain of the amplifier 71 to fully utilize the range of the analog to digital convertor 90. The pressure differential of approximately 17% is also good. A third bar 104a of the first triplet illustrates the pressure differential between a good bottle and leaky bottle as measured by the present finish leak detector 10 after an adjustment to the gain of the amplifier 71 to fully utilize the range of the analog to digital converter 90. The resultant pressure differential of approximately 50% is much better than either of the foregoing.

The subsequent triplets in Figure 4 illustrate that for increased throughput, the pressure differentials as measured by the prior art system of U.S. Patent No. 3,496,761 decrease steadily to a level of approximately 10% at 350 bottles per minute whereas the pressure differential for the present finish leak detector 10 without adjustment of the gain of the amplifier 71 remains approximately in the range of 16-18% and the pressure differential of the present finish leak detector 10 after adjustment to the gain of amplifier 71 remains high and within the range of 50-53%. This illustrates the improved performance provided by the present finish leak detector 10 as compared to the prior art system.

It should also be noted that the leak detector 10 measures other types of leaks such as holes in the container.

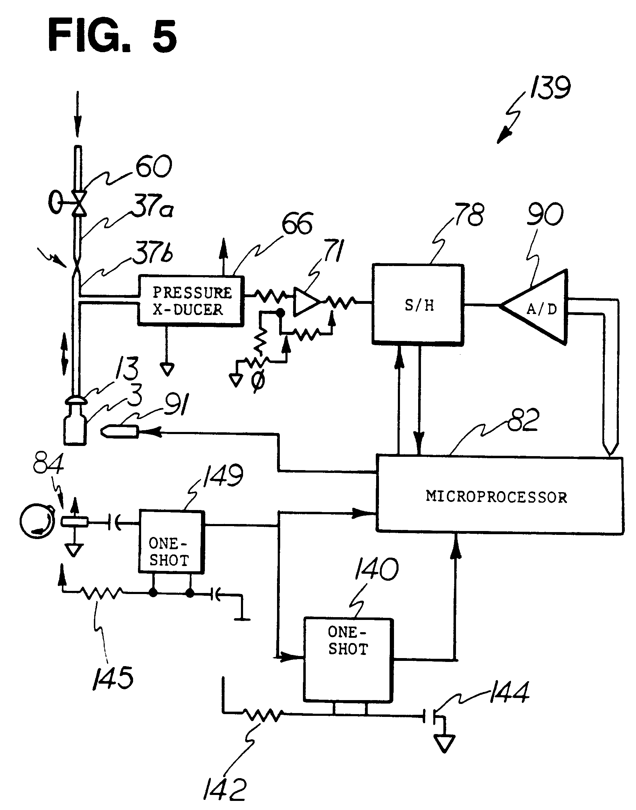

Figure 5 illustrates another leak detector generally designated 139 which embodies the invention. The leak detector 139 is similar to the leak detector 10 with like reference numerals indicating like components and with the following changes.

A one-shot 149, while being triggered by the cam 84 in the manner noted above, generates a shorter pulse width than in the leak detector 10 because of a resistor 145 which has a lower value than the resistor 83. By way of example, the one-shot 149 in the leak detector 139 generates a pulse having a width of 75 milliseconds. The termination of the pulse is detected by the microprocessor 82, at which time the microprocessor 82 triggers the sample and hold circuit 78. Shortly thereafter, the microprocessor 82 notes the corresponding voltage via the analog to digital convertor 90. The termination of the pulse produced by the one-shot 149 also triggers a one-shot 140 which has a timing resistor 142 and timing capacitor 144. By way of example, the one-shot 140 produces a pulse having a width of 20 milliseconds, and the termination of which pulse is sensed by the microprocessor 82. In response, the microprocessor 82 again triggers the sample and hold circuit 78 to make another pressure reading.

Next, the microprocessor 82 is programmed to determine the approximate rate of pressure rise in the container between the two sample times indicated by the termination of the pulses from the one-shots 149 and 140. Because this portion of the pressure rise curve is approximately linear, one way of measuring such approximate rate of pressure rise is simply to subtract the two pressures and divide the difference by the amount of time between such pressure readings.

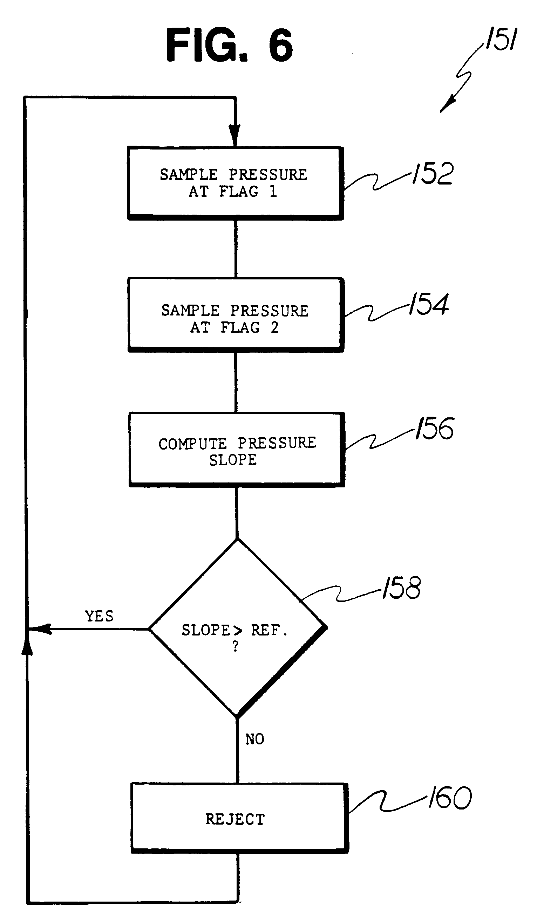

Figure 6 illustrates a computer program 151 within the microprocessor 82 which implements the foregoing. The termination of the pulse of the one-shot 149 sets a flag 1 which is sensed by the microprocessor 82 to initiate the first pressure sampling (step 152). The termination of the pulse from the one-shot 140 sets a flag 2 which indicates the time for the second pressure sampling (step 154). Next, in a step 156, the microprocessor 82 computes the pressure slope or other aspect of the pressure rise curve by the foregoing method or other standard method. If the slope is greater than a predetermined reference standard, the container is acceptable, but if it is not, this indicates a leak and a defective bottle (step 158). Consequently, the microprocessor 82 send a reject signal to the rejector 91 (step 160).

The leak detector 139 has certain virtues. It is difficult in most systems to determine the precise moment that the test fitting 13 makes contact with the container 3 and such contact time varies with differences in the container height. While such variations effect the actual pressure measure at any sample time, it is not a significant factor in the leak detector 139 because the leak detector 139 is interested in a pressure differential between two sample times and such differential is not significantly effected by a nearly equal offset to each of the pressure samples. In addition, in the leak detector 139, the rate of pressure rise or, for that matter, the pressure rise curve may be determined sooner than in the leak detector 10 based on the foregoing method for calculating the pressure differential or other more complex, but standard methods for estimating a logarithmic curve from a limited number of samples. Therefore, the leak detector 139 may accommodate an even greater throughput than the leak detector 10.

By the foregoing, finish leak detectors embodying the present invention have been disclosed. However, numerous modifications and substitutions may be made without deviating from the scope of the invention. For example, if desired, a simple analog comparator may be substituted in the circuit of Figure 2 for the analog to digital convertor 90 and the micro-processor 82 with one input of the comparator connected to the output of the sample and hold detector 78, the other input of the comparator connected to a predetermined threshold and the output of the comparator connected to the input of the rejector 91. Also if desired, the sample time can be adjusted in accordance with the throughput, such that for lower rates at throughput, the sample time is increased.

## Claims

1. An apparatus for testing the mouth (22) of a glass bottle (3) for sealing surface defects at an inspection site comprising
a test fitting (13) with an aperture passing there through
conveyor means (2) for presenting a succession of glass bottles to the inspection site
means (12) for moving the test fitting into engagement with the mouth (22) of a glass bottle (3) at the inspection site
a source (60) of pressure regulated gas
a hose (37) for coupling the source (60) to the aperture in the test fitting to deliver the gas to the glass bottle (3) when the test fitting engages the glass bottle at the inspection site
a pressure transducer (66) connected to the hose (37) for measuring the pressure in the glass bottle (3)
a restrictor (62) between the source (60) and the connection to the transducer (61) for limiting the rate of flow of gas from the source (60) into the glass bottle (3) at the inspection site, so that the pressure within the glass bottle will increase towards a steady state pressure which would be higher for a glass bottle without defects than for a glass bottle with defects
means (69, 139) which samples the approximate pressure in the glass bottle measured by the transducer (66) a predetermined time (70) after the test fitting engages the glass bottle mouth (22) and gas begins to flow into the glass bottle, such time (70) being before a steady state pressure is established if the glass bottle is properly sealed by the test fitting (13), whether or not the glass bottle has defects,
means (82) for comparing the sampled pressure with a standard
and means (93) for rejecting the glass bottle if the sampled pressure does not agree with said standard.

2. Apparatus according to claim 1 characterized in that the pressure in the glass bottle (3) at the predetermined time (70) is less than two-thirds of the source pressure if the glass bottle (3) is properly sealed by the test fitting (13).

3. Apparatus according to one of claims 1 and 2 characterized in that the hose (37) comprises:
a first hose (37a) connected at one end to the source (60) of pressure regulated gas, and
a second hose (37b) connected at one end to the aperture in the test fitting (13), and the restrictor (62) has an aperture (67) less than the inner diameter of one of the hoses (37a, 37b) and is connected between the other ends of the first and second hoses (37a, 37b).

4. Apparatus according to claim 3 characterized in that the area of the aperture (67) in the restrictor (62) is within a factor of two, larger or smaller, of the area of an average size leak.

5. Apparatus according to any of claims 1 and 4 characterized in that the means for sampling the approximate pressure in the glass bottle measured by the transducer (66) comprises an amplifier (71) connected to the output of the pressure transducer (66),
a sample and hold circuit (78) connected to the output of the amplifier (71) and,
an analog to digital converter (90) connected to the output of the sample and hold circuit (78) and,
the amplifier has a variable gain (92) to utilize the full range of the analog to digital converter.

6. Apparatus according to any of claims 1 to 5 for testing the mouths (22) of a first series of first glass bottles (3) of a first fluid capacity and the mouths of a second series of second glass bottles of a second, different fluid capacity for sealing surface defects at an inspection site, the test fitting (13) being adapted to the type of glass bottles being tested, characterized in that
the predetermined time (70) is the same for both the first and second series of glass bottles, and
the means for comparing the pressure in the bottles of the first and second series at the sample time utilizes a single pressure standard to identify defective glass bottles.

7. Apparatus according to any of claims 1 to 6 characterized in that the means for sampling the pressure in the glass bottle (3) is an electronic means which includes means for sampling the pressure in the glass bottle (3) at least twice before the pressure in the properly sealed glass bottle (3) reaches two-thirds of the source pressure, and basing its determination at least in part on the pressure differential and elapsed time between the two or more samples.

## Patentansprüche

1. Gerät zum Testen der Öffnung (22) einer Glasflasche (3) zum Abdichten von Oberflächendefekten an einem Untersuchungsort, wobei das Gerät umfaßt:
ein Testanschlußstück (13) mit einer dort hindurchgehenden Öffnung,
eine Fördereinrichtung (2) zum Bringen einer Reihe von Glasflaschen zu dem Untersuchungsort,
eine Einrichtung (12) zum Bewegen des Testanschlußstücks in Eingriff mit der Öffnung (22) einer Glasflasche (3) an dem Untersuchungsort,
eine Quelle (60) druckregulierten Gases,
einen Schlauch (37) zum Koppeln der Quelle (60) mit der Öffnung in dem Testanschlußstück, um das Gas zu der Glasflasche (3) zu liefern, weg das Testanschlußstück mit der Glasflasche an dem Untersuchungsort in Eingriff steht,
einen Druckwandler (66), der mit dem Schlauch (37) verbunden ist, zum Messen des Drucks in der Glasflasche (3),
eine Begrenzungseinrichtung (62) zwischen der Quelle (60) und dem Anschluß zu dem Wandler (61) zum Begrenzen der Gasflußgeschwindigkeit von der Quelle (60) in die Glasflasche (3) an dem Untersuchungsort, so daß sich der Druck innerhalb der Glasflasche auf einen stationären Druck erhöhen wird, der für eine Glasflasche ohne Defekte höher sein wurde, als für eine Glasflasche mit Defekten,
eine Einrichtung (69, 139), die den ungefähren Druck in der Glasflasche abtastet, der durch den Wandler (66) zu einer vorbestimmten Zeit (70) gemessen ist, nachdem das Testanschlußstück mit der Glasflaschenöffnung (22) in Eingriff steht und Gas beginnt, in die Glasflasche zu fließen, wobei eine derartige Zeit (70) verstreicht, bevor ein stationärer Druck errichtet wird, wenn die Glasflasche durch das Testanschlußstück (13) geeignet abgedichtet ist, gleichgültig ob die Glasflasche Defekte hat oder nicht,
eine Einrichtung (82) zum Vergleichen des abgetasteten Drucks mit einem Standard,
und eine Einrichtung (93) zum Verwerfen der Glasflasche, wenn der abgetastete Druck nicht mit dem Standard übereinstimmt.

2. Gerät nach Anspruch 1, dadurch gekennzeichnet, daß der Druck in der Glasflasche (3) zu der vorbestimmten Zeit (70) geringer als zwei Drittel des Quellendrucks ist, wenn die Glasflasche (3) durch das Testanschlußstück (13) geeignet abgedichtet ist.

3. Gerät nach einem der Ansprüche 1 und 2, dadurch gekennzeichnet, daß der Schlauch (37) umfaßt:
einen ersten Schlauch (37a), der an einem Ende mit der Quelle (60) des druckregulierten Gases angeschlossen ist, und
einen zweiten Schlauch (37b), der an einem Ende mit der Öffnung in dem Testanschlußstück (13) verbunden ist, und wobei die Begrenzungseinrichtung (62) eine Öffnung (67) hat, die geringer als der innere Durchmesser einer der Schläuche (37a, 37b) ist, und zwischen die anderen Enden des ersten und des zweiten Schlauchs (37a, 37b) angeschlossen ist.

4. Gerät nach Anspruch 3, dadurch gekennzeichnet, daß der Bereich der Öffnung (67) in der Begrenzungseinrichtung (62) innerhalb eines Faktors von zwei liegt, größer oder kleiner, und zwar des Bereichs eines Lecks durchschnittlicher Größe.

5. Gerät nach einem der Ansprüche 1 und 4, dadurch gekennzeichnet, daß die Einrichtung zum Abtasten des ungefähren Drucks in der Glasflasche, der durch den Wandler (66) gemessen ist, umfaßt:
einen Verstärker (71), der mit dem Ausgang des Druckwandlers (66) verbunden ist,
einen Abtast- und Halteschaltkreis (78), der mit dem Ausgang des Verstärkers (71) verbunden ist, und
einen Analog/Digital-Wandler (90), der mit dem Ausgang des Abtast- und Halteschaltkreises (78) verbunden ist, und wobei der Verstärker einen variablen Verstärkungsfaktor (92) aufweist, um den gesamten Bereich des Analog/Digital-Wandlers auszunutzen.

6. Gerät nach einem der Ansprüche 1 bis 5 zum Testen der Öffnungen (22) einer ersten Reihe erster Glasflaschen (3) einer ersten Fluidkapazität, und der Öffnungen einer zweiten Reihe von zweiten Glasflaschen einer zweiten, unterschiedlichen Fluidkapazität, zum Abdichten von Oberflächendefekten an einem Untersuchungsort, wobei das Testanschlußstück (13) an den Typ der Glasflaschen angepaßt ist, die getestet werden, dadurch gekennzeichnet, daß
die vorbestimmte Zeit (70) sowohl für die erste als auch die zweite Reihe von Glasflaschen die gleiche ist, und
die Einrichtung zum Vergleichen des Drucks in den Flaschen der ersten und der zweiten Reihe zu der Abtastzeit einen einzigen Druckstandard benutzen, um defekte Glasflaschen zu identifizieren.

7. Gerät nach einem der Ansprüche 1 bis 6, dadurch gekennzeichnet, daß die Einrichtung zum Abtasten des Drucks in der Glasflasche (3) eine elektronische Einrichtung ist, die eine Einrichtung enthält zum mindestens zweimal Abtasten des Drucks in der Glasflasche (3), bevor der Druck in der geeignet abgedichteten Glasflasche (3) zwei Drittel des Quellendrucks erreicht, und deren Bestimmung zumindest teilweise auf der Druckdifferenz und verstrichener Zeit zwischen den zwei oder mehreren Abtastungen basiert.

## Revendications

1. Appareil destiné à contrôler la bouche (22) d'une bouteille (3) en verre pour y détecter des défauts de la surface d'étanchéité dans un poste de contrôle, qui comprend :
- un embout (13) d'essai présentant une ouverture qui le traverse ;
- des moyens (2) transporteurs destinés à présenter une succession de bouteilles en verre au poste de contrôle ;
- des moyens (2) destinés à mettre l'embout d'essai en contact avec la bouche (22) d'une bouteille (3) en verre au poste de contrôle ;
- une source (60) de gaz réglée en pression ;
- un tuyau (37) destiné à raccorder la source (60) à l'ouverture de l'embout d'essai pour débiter le gaz dans la bouteille (3) en verre lorsque l'embout d'essai est en contact avec la bouteille en verre au poste de contrôle ;
- un transducteur (66) de pression relié au tuyau (37) pour mesurer la pression régnant dans la bouteille (3) en verre ;
- un organe (62) d'étranglement placé entre la source (66) et le raccordement au transducteur (61) pour limiter le débit de gaz allant de la source (60) à la bouteille (3) en verre au poste de contrôle de manière que la pression régnant dans la bouteille en verre croisse avec une pression de régime permanent qui serait plus élevée pour une bouteille en verre dépourvue de défauts que pour une bouteille en verre présentant des défauts ;
- des moyens (69, 139) qui échantillonnent la pression approximative régnant dans la bouteille en verre, mesurée par le transducteur (66) un temps (70) prédéterminé après que l'embout d'essai est entré en contact avec la bouche (22) de la bouteille en verre et que le gaz a commencé à pénétrer dans la bouteille en verre, ce temps (70) se plaçant avant qu'une pression de régime permanent se soit établie si la bouteille en verre est convenablement fermée par l'embout (13) d'essai, que la bouteille en verre ait des défauts ou non ;
- des moyens (82) destinés à comparer la pression échantillonnée à un étalon ;
- et des moyens (93) destinés à rejeter la bouteille en verre si la pression échantillonnée n'est pas en accord avec cet étalon.

2. Appareil selon la revendication 1, caractérisé en ce que la pression intérieure de la bouteille (3) en verre à un instant (70) prédéterminé, est inférieure aux deux tiers de la pression de la source si la bouteille (3) en verre est convenablement fermée par l'embout d'essai.

3. Appareil selon une des revendications 1 et 2, caractérisé en ce que le tuyau (37) comprend :
- un premier tuyau (37a) relié à une extrémité à la source (60) de gaz réglée en pression ; et
- un deuxième tuyau (37b) relié à une extrémité à l'ouverture de l'embout (13) d'essai, et l'organe (62) d'étranglement a une ouverture (67) inférieure au diamètre inférieur de l'un des tuyaux (37a, 37b) et est connecté entre les autres extrémités des premier et second tuyayx (37a, 37b).

4. Appareil selon la revendication 3, caractérisé en ce que l'aire de l'ouverture (67) de l'organe (62) d'étranglement est entre une aire deux fois plus grande et une aire deux fois plus petite que celle d'une fuite de dimension moyenne.

5. Appareil selon une quelconque des revendications 1 et 4, caractérisé en ce que les moyens servant à échantillonner la pression approximative régnant dans la bouteille en verre, mesurée par le transducteur (66) comprenant un amplificateur (71) connecté à la sortie du transducteur (66) de pression ;
- un circuit (78) échantillonneur-bloqueur connecté à la sortie de l'amplificateur (71) ; et
- un convertisseur (90) analogique-numérique connecté à la sortie du circuit (78) échantillonneur-bloqueur et où
- l'amplificateur a un gain (92) variable pour utiliser toute la plage du convertisseur analogique-numérique.

6. Appareil selon une quelconque des revendications 1 à 5, destiné à contrôler les bouches (22) d'une première série de premières bouteilles (3) en verre possédant une première capacité en fluide, et les bouches d'une seconde série de secondes bouteilles en verre possédant une seconde capacité en fluide, différents, pour la détection des défauts de la surface d'étanchéité dans un poste de contrôle, l'embout (13) d'essai étant adapté au type de bouteilles en verre à contrôler, caractérisé en ce que :
- le temps (70) prédéterminé est le même pour la première et la seconde série de bouteilles en verre ; et
- les moyens destinés à comparer la pression dans les bouteilles de la première et de la seconde série à l'instant d'échantillonnage utilisent un seul et même étalon de pression pour identifier les bouteilles en verre défectueuses.

7. Appareil selon une quelconque des revendications 1 à 6, caractérisé en ce que les moyens destinés à échantillonner la pression intérieure de la bouteille (3) en verre sont des moyens électroniques qui comprennent des moyens destinés à échantillonner la pression intérieure de la bouteille (3) en verre au moins deux fois avant que la pression régnant dans la bouteille (3) en verre convenablement fermée atteigne les deux tiers de la pression de la source, et qui fondent la détermination de cette pression au moins en partie sur la différence de pression et le temps écoulé entre les deux ou plus de deux échantillonnages.
